# EUROPÄISCHE PATENTSCHRIFT

(11) **EP 0 466 713 B1**
(45) Veröffentlichungstag und Bekanntmachung des Hinweises auf die Patenterteilung: **09.06.1993**
(21) Anmeldenummer: 90904353.1
(22) Anmeldetag: 16.03.1990
(51) Int. Cl.: F16B 13/00, E04F 13/00

(54) **MEHRTEILIGER DÜBEL**
MULTI-PART DOWEL
CHEVILLE EN PLUSIEURS PARTIES

(30) Priorität: 03.04.1989 DE 3910702
(43) Veröffentlichungstag der Anmeldung: 22.01.1992
(73) Patentinhaber: Oldendorf, Günter, 73441 Bopfingen (DE)
(72) Erfinder: Oldendorf, Günter, 73441 Bopfingen (DE)
(74) Vertreter: Schroeter, Helmut
(86) Internationale Anmeldenummer: EP9000435
(87) Internationale Veröffentlichungsnummer: WO9012214

(56) Entgegenhaltungen:
- CH-A- 417 227
- DE-A- 1 534 025
- DE-A- 3 018 975
- FR-A- 789 416
- US-A- 2 240 716

## Beschreibung

Die Erfindung betrifft einen mehrteiligen Dübel mit den im Oberbegriff von Anspruch 1 genannten Merkmalen. Ein derartiger mehrteiliger Dübel ist aus der US-A-2 240 716 - PLEISTER - bekannt. Der Dübel nach PLEISTER hat lediglich die Aufgabe, einen irgendwie gearteten Bauteil an einer Wand festzuhalten. Er hat einen Außenkörper, der zur Aufnahme entweder einer eingängigen oder einer zweigängigen Schraube dienen soll, bei denen die Längsabstände zwischen den Rippen gleich sind. Zu diesem Zweck ist der Außenkörper mit Gewinderippenhälften versehen, die so angeordnet sind, daß Schrauben mit dem einen oder anderen Gewinde eingedreht werden können. Andererseits sind aus der DE-A-1 534 025 Kunststoffdübel mit Innengewinde für Betonschwellen als Schienenunterlage bekannt geworden. Hier ist in den Tiefen der Gewindegänge eine zusätzliche Ausnehmung vorgesehen, die zur Überbrückung von Toleranzen dienen soll.

Durch die vorliegende Erfindung soll ein mehrteiliger Dübel geschaffen werden, dessen bevorzugtes Anwendungsgebiet das Anbringen von Baustoffen, z. B. Gewebe aus Textilmaterial oder aus Glasfaser, an einer Mauer, an Wänden oder Decken ist. Der Dübel soll es ermöglichen, derartige flächenhafte Materialien in eine Ebene auszurichten. Dazu soll der Dübel nach seinem Eintreiben eine Justierung quer zur Ebene der Wand oder Decke ermöglichen. Zur Verringerung des Zeitaufwandes beim Anbringen des Dübels soll der Innenkörper in den Außenkörper, z. B. mit einem Hammer oder Bohrhammer eingeschlagen werden können. Außerdem soll der Dübel eine Entlüftung des Mauerwerks von Wänden oder Decken ermöglichen.

Diese Aufgabe wird durch die Erfindung gemäß Anspruch 1 gelöst. (In den folgenden Ausführungen werden auch die in den Ansprüchen definierten Begriffe verwendet.)

Im Gebrauch wird der Außenkörper des Dübels in ein in die Wand oder Decke gebohrtes Loch gesteckt. Dann wird der Innenkörper mit einem Hammer oder Bohrhammer eingatrieben, wobei seine schraubenförmigen Rippen in die schraubenförmigen Nuten des Außenkörpers eingreifen. Während des Eintreibens vollführt der Innenkörper gegenüber dem Außenkörper eine teilweise, z.B. eine halbe Umdrehung. Der vordere Abschnitt des Außenkörpers wird beim Eintreiben des Innenkörpers nach Art eines Spreizdübels aufgeweitet, wodurch der Dübel im Bohrloch festgesetzt wird.

Mindestens eine der Rippen des Innenkörpers, im Normalfall alle Rippen des Innenkörpers, sind mit je einer über ihre Länge verlaufenden Entlüftungsnut versehen, die mit dem Außenende des Innenkörpers in Verbindung steht. Hierdurch wird eine Entlüftungsmöglichkeit für die Wand oder Decke geschaffen.

Das Gewinde kann aus unterschiedlichen Anzahlen von Rippen oder Nuten aufgebaut werden. Vorzugsweise werden drei sternförmig zueinander angeordnete Rippen und Nuten verwendet.

Haben der Außenkörper und der Innenkörper je einen scheibenartigen Kopf, so lassen sich die oben erwähnten Baustoffe zwischen beiden anbringen. Der Innenkörper läßt sich gegenüber dem Außenkörper durch einen Schraubvorgang justieren, was durch Ausbildung des Kopfes des Innenkörpers als Schraubenkopf erleichtert werden kann.

Der Innenkörper kann außer seinem Kopf noch eine unter einigem axialen Abstand davon angeordnete Distanzscheibe aufweisen, so daß Baustoffe zwischen beiden eingehängt werden können.

Drahtnetze lassen sich ohne Beschädigung nicht so stark aufweiten, daß sie über einen scheibenartigen Kopf gehängt werden können. Deren Anbringung kann durch ein zusätzliches Befestigungselement ermöglicht werden, das mit einem Schaft in einem nach außen offenen Kanal des Innenkörpers des Dübels zu verankern ist. Man kann dann das Drahtnetz auf den scheibenartigen Kopf des Innenkörpers legen, den Schaft des Befestigungselements durchstecken und schließlich im Außenende des Innenkörpers verankern.

Dies läßt sich nach Art eines Druckknopfsystems bewerkstelligen, aber auch durch Ausbildung des Schaftes des Befestigungselements und der Innenseite des Kanals als zueinander passende Gewinde, deren Ganghöhe wiederum größer sein kann als deren Länge, so daß der Schaft bis zum vollständigen Eindringen nur z.B. eine halbe Umdrehung auszuführen braucht.

Um auch bei Verwendung eines Befestigungselements für eine Entlüftung der Wand zu sorgen, kann ein Luftloch am Boden des Kanals vorgesehen sein, während andererseits zwischen Kanal und Schaft des Befestigungselements für einen weiteren Entlüfungsweg nach außen gesorgt werden kann.

Ausführungsbeispiele mit weiteren Merkmalen der Erfindung werden im folgenden anhand der Zeichnungen beschrieben.
- Figur 1: zeigt in Seitenansicht den Außenkörper eines mehrteiligen Dübels nach der Erfindung.
- Figur 2: zeigt in Seitenansicht, zum Teil im Schnitt, den zugehörigen Innenkörper.
- Figur 3: zeigt in Seitenansicht ein zugehöriges Befestigungselement.
- Figur 4: ist eine Stirnansicht aus der Ebene IV - IV in Figur 1.
- Figur 5: ist ein Querschnitt in der Ebene V - V in Figur 1.
- Figur 6: ist eine teilweise Endansicht aus der Ebene VI - VI in Figur 2, erheblich vergrößert.
- Figur 7: zeigt eine Variante des Innenkörpers mit einer Distanzscheibe, in Seitenansicht.
- Figur 8: ist eine Variante des Innenkörpers in Seitenansicht, zum Teil im Schnitt mit einem Kanal mit Innengewinde.
- Figur 9: zeigt in Seitenansicht ein zugehöriges Befestigungselement mit Schraubschaft mit Außengewinde.

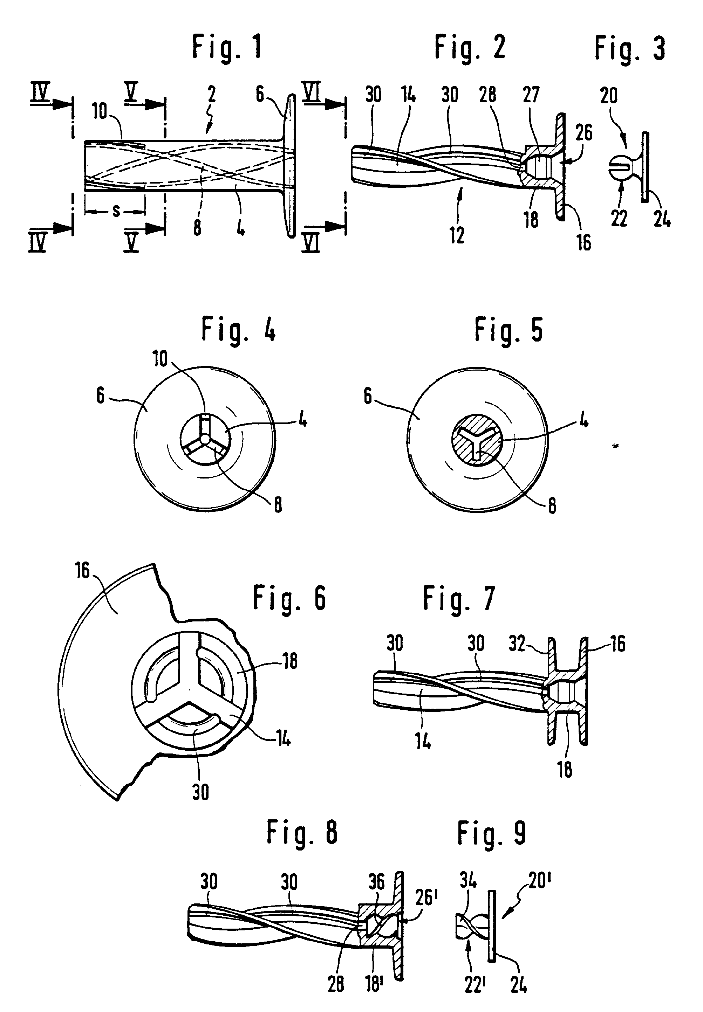

Der in Figur 1 dargestellte Außenkörper 2 des Dübels hat einen etwa zylindrischen Schaft 4. Er kann außerdem, was zweckmäßig ist, einen scheibenförmigen Kopf 6 haben. Der Außenkörper ist massiv aus Metall oder Kunststoff hergestellt. In seinem Innern hat er, sternförmig angeordnet, drei schraubenförmige Nuten 8 (vgl. auch Figur 4 und 5). Diese Nuten sind sternförmig angeordnet und vollführen über die ganze Länge des Außenkörpers 2 eine halbe Umdrehung. Die Ganghöhe des von ihnen gebildeten Außengewindes würde sich also über die doppelte Länge des Außenkörpers erstrecken.

Das linke Ende des Schaftes 4 ist über eine Länge s mit nach außen durchgehenden Schlitzen 10 versehen, die Fortsetzungen der schraubenförmigen Nuten 8 bilden und dem Innenende (links in Figur 1) des Außenkörpers die Möglichkeit geben, sich beim Eintreiben des Innenkörpers zu spreizen.

Während Figur 4 die schraubenförmigen Nuten 8 in Außenansicht zeigt, zeigt Figur 5 ihre Lage in der Ebene V - V in Figur 1, also um ca. 60° gegenüber der Lage nach Figur 4 verdreht.

Figur 2 zeigt den Innenkörper 12 des Dübels. Er hat drei zueinander sternförmig angeordnete schraubenförmige Rippen 14 und einen scheibenartigen Kopf 16, der, was hier nicht dargestellt ist, einen Schlitz zum Ansetzen eines Schraubenziehers, auch als Einsatz eines Bohrhammers, haben kann. Der Innenkörper wird aus Kunststoff gefertigt. Er kann, wie es Figur 2, 7 und 8 zeigen, rechts einen zylindrischen Schaft 18 haben. Stattdessen könnte sich aber der scheibenartige Kopf 16 unmittelbar den schraubenförmigen Rippen 14 anschließen.

Ist ein Schaft 18 vorhanden, so dient er zum Anbringen eines Befestigungselementes 20, das Figur 3 zeigt. Es hat einen Dorn 22 und einen plattenartigen Kopf 24. Der Kopf läßt sich nach dem Druckknopfsystem in einer Erweiterung 27 eines Kanals 26 drücken, der co-axial in den Schaft 18 des Innenkörpers hineinführt. Zum Anbringen von Matten aus Drahtgewebe wird der Dorn 22 durch eine Öffnung innerhalb der Matte gesteckt und dann in den Kanal 26 gedrückt, wodurch die Matte zwischen den Köpfen 16 und 24 festgehalten wird.

Am Boden des Kanals 26 ist ein Luftloch 28 vorgesehen. Von diesem Luftloch aus führt einerseits ein Entlüftungsweg nach außen, zum Teil innerhalb des Dorns 22, zum Teil zwischen dessen Hals und der Wand des Kanals 26. Nach innen wird ein Entlüftungsweg durch Entlüftungsnuten 30 gebildet , die längs aller drei schraubenförmigen Rippen 14 verlaufen, wie es Figur 2 und 6 zeigen. Somit besteht nach dem Einbringen des Dübels ein ununterbrochener Entlüftungsweg vom inneren Ende (links in Figur 1) des Außenkörpers durch dessen Schlitze 10 und Nuten 8, weiter durch die Entlüftungsnuten 30 des Innenkörpers, das Luftloch 28 und, wie beschrieben, durch den Kanal 26 entlang dem Befestigungselement 20 (sofern vorhanden).

Figur 7 zeigt, daß der Innenkörper zusätzlich zu seinem Kopf 16 in einigem axialen Abstand noch eine Distanzscheibe 32 aufweisen kann. Zwischen Distanzscheibe und Kopf 16 lassen sich in bekannter Weise Matten oder weitmaschige Gewebe einhängen, auch engmaschige Gewebe, sofern deren Maschen entsprechend geweitet werden können.

Figur 8 und 9 zeigen eine Variante, wonach das Befestigungselement 20' einen Dorn 22' in Form eines zweigängigen Gewindes aufweist. Auch dieses Gewinde hat eine Ganghöhe, die größer ist als die Länge des Dornes 22'. Es beschreibt nur eine halbe Umdrehung über die ganze Länge. Entsprechend hat der Schaft 18' des Innenkörpers ein dazu passendes Innengewinde in Form von schraubenförmigen Nuten 36. Das Befestigungselement 20' kann nach Durchführen seines Dornes 22' durch eine Gewebeöffnung einfach in den Schaft 18' des Innenkörpers eingeschlagen werden oder, sofern ein Schraubschlitz o.dgl. vorhanden ist, eingedreht werden, auch unter Verwendung eines Bohrhammers.

## Patentansprüche

1. Mehrteiliger Dübel, mit
a) einem Außenkörper (2), der einen etwa zylindrischen Schaft (4) mit Innengewinde hat und
b) einem Innenkörper (12), mit einem mehrgängigen Außengewinde, in Form auswärts ragender, schraubenförmiger Rippen (14),
dadurch **gekennzeichnet**, daß der Dübel, um ein Einschlagen seines Innenkörpers (12) in seinen Außenkörper (2) zu ermöglichen, folgende Merkmale hat:
c) die Ganghöhen von Außen- und Innengewinde sind größer als deren Längen,
d) der Außenkörper (2) hat in seinem massiven Schaft (4), im Querschnitt betrachtet, in Sternform angeordnete, schraubenförmige, durchgehende Nuten (8), die das Innengewinde mehrgängig ausgestalten,
e) die das Außengewinde des Innenkörpers bildenden Rippen (14) sind in einer dazu passenden Sternform angeordnet,
und daß, um eine Entlüftung des Mauerwerks zu ermöglichen,
f) in dem in Gebrauchslage vorderen Abschnitt des Außenkörpers (2) die Nuten selbst oder sie fortsetzende Schlitze (10) bis zur Außenwandung des Außenkörpers reichen und
g) mindestens eine der Rippen (14) eine über ihre länge verlaufende Entlüftungsnut (30) hat, die mit dem Außenende des Innenkörpers in Verbindung steht.

2. Dübel nach Anspruch 1, dadurch **gekennzeichnet**, daß das Gewinde drei sternförmig angeordnete Rippen (14) und Nuten (8) hat.

3. Dübel nach Anspruch 1, dadurch **gekennzeichnet**, daß der Außenkörper (2) und der Innenkörper (12) je einen scheibenartigen Kopf (6, 16) haben.

4. Dübel nach Anspruch 3, dadurch **gekennzeichnet**, daß der Kopf (16) des Innenkörpers (12) als Schraubenkopf ausgebildet ist.

5. Dübel nach Anspruch 3, dadurch **gekennzeichnet**, daß der Innenkörper unter axialem Abstand von seinem plattenartigen Kopf eine Distanzscheibe (32) aufweist. (Figur 7)

6. Dübel nach Anspruch 1, **gekennzeichnet** durch folgende Merkmale:
a) der Dübel hat zusätzlich ein Befestigungselement (20, 20') zum Anbringen von Gegenständen, insbesondere flächenhafter Materialien am Außenende des Innenkörpers (12),
b) der Innenkörper (12) hat zwischen dem äußeren Ende der Rippen (14) und dem Kopf (16) einen Schaft (18) mit einem nach außen offenen Kanal (26),
c) das Befestigungselement hat einen in dem Kanal zu verankernden Dorn (22, 22') und einen insbesondere plattenartigen Kopf (24).

7. Dübel nach Anspruch 6, dadurch **gekennzeichnet**, daß der Dorn (22) und der Kanal (26) nach Art eines Druckknopfes ausgebildet sind. (Fig. 2 und 3)

8. Dübel nach Anspruch 7, dadurch **gekennzeichnet,** daß der Dorn (22') und der Kanal (26') als Außen- bzw. Innengewinde ausgebildet sind. (Fig. 8 und 9)

9. Dübel nach Anspruch 8, dadurch **gekennzeichnet**, daß die Ganghöhe des Gewindes von Dorn (22') und Kanal (26') größer ist als dessen Länge.

10. Dübel nach Anspruch 8, dadurch **gekennzeichnet,** daß das Gewinde zweigängig ist und zwei in radialer Richtung miteinander fluchtende Rippen (34) bzw. Nuten (36) hat.

11. Dübel nach Anspruch 6, dadurch **gekennzeichnet**, daß der Boden des Kanals (26, 26') durch ein Luftloch (28) mit der oder den Entlüftungsnuten (30) in Verbindung steht, und daß zwischen der Innenwandung des Kanals (26, 26') und dem Dorn (22, 22') des Befestigungselements (20, 20') ein nach außen führender Entlüftungsweg vorhanden ist.

## Claims

1. A multipart dowel with
a) A sleeve (2) having an approximately cylindrical, female threaded shank (4) and
b) A core (12), with a multiplex male thread in the form of outward projecting helical ribs (14),
**characterised** by the fact that the dowel has the following features in order to enable its core (12) to be driven into its sleeve (2):
c) The leads of the male and female threads are greater than their lengths,
d) In the solid shank (4) of the sleeve (2), viewed in cross-section, are helical, through-grooves (8) in stellate arrangement forming the multiplex female thread,
e) The ribs (14) forming the male thread of the core are in stellate arrangement to match,
and that, in order to enable ventilation of masonry,
f) In the front section of the sleeve (2) in the position when in use, the grooves themselves or their continuation slots (10) extend up to the outer wall of the sleeve and
g) At least one of the ribs (14) has a ventilation groove (30) running along its complete length and connected to the outer end of the core.

2. A dowel in accordance with Claim 1, **characterised** by the fact that the thread has three ribs (14) and grooves (8) in stellate arrangement.

3. A dowel in accordance with Claim 1, **characterised** by the fact that the sleeve (2) and core (12) each have a disc type head (6, 16).

4. A dowel in accordance with Claim 3, **characterised** by the fact that the head (16) of the core (12) is in the form of a screw head.

5. A dowel in accordance with Claim 3, **characterised** by the fact that the core has a distance disc (32) further in axial distance from its disc type head (Figure 7).

6. A dowel in accordance with Claim 1, **characterised** by the following features:
a) The dowel has in addition a fastener (20, 20') for the attachment of objects, especially flat materials on the outer end of the core (12),
b) Between the outer end of the ribs (14) and the head (16), the core (12) has a shank (18) with a channel (26) which is open towards the outside,
c) The fastener has a projection (22, 22') for anchoring in the channel and an especially plate-like head (24).

7. A dowel in accordance with Claim 6, **characterised** by the fact that the projection (22) and channel (26) are formed like a press-stud (Figures 2 and 3).

8. A dowel in accordance with Claim 7, **characterised** by the fact that the projection (22') and channel (26') are formed as male and female threads respectively (Figures 8 and 9).

9. A dowel in accordance with Claim 8, **characterised** by the fact that the leads of the threads of projection (22') and channel (26') are greater than their length.

10. A dowel in accordance with Claim 8, **characterised** by the fact that it is double-threaded and has two ribs (34) and grooves (36) in radial alignment with each other.

11. A dowel in accordance with Claim 6, **characterised** by the fact that the bottom of the channel (26, 26') is connected through an airhole (28) with ventilation groove or grooves (30) and that there is a ventilation path leading to the outside between the inner wall of the channel (26, 26') and the projection (22, 22') of the fastener (20, 20').

## Revendications

1. Piton en plusieurs parties, avec :
a) un corps extérieur (2) ayant un fût (4) sensiblement cylindrique avec un filetage interne, et
b) un corps intérieur (12) avec un filetage externe à pas multiple, sous la forme de nervures hélicoïdales (14) saillantes vers l'extérieur,
**caractérisé** en ce que le piton présente, pour permettre l'enfoncement de son corps intérieur (12) dans son corps extérieur (2), les caractéristiques suivantes :
c) les pas des filetages externes et internes sont plus grands que leurs longueurs,
d) le corps extérieur (2) a, dans son fût massif (4), des rainures hélicoïdales continues (8) disposées en étoile, en étant vues en coupe transversale, qui constituent le filetage interne à pas multiple,
e) les nervures (14) constituant le filetage externe du corps intérieur sont disposées en étoile, d'une manière assortie à celles-ci,
et en ce que, pour permettre une évacuation de l'air de la maçonnerie,
f) dans la section antérieure, en position d'utilisation, du corps extérieur (2) les rainures elles-mêmes ou les fentes (10) qui les prolongent s'étendent jusqu'à la paroi externe du corps extérieur, et
g) au moins une des nervures (14) a une rainure d'aération (30) s'étendant sur sa longueur, communiquant avec l'extrémité extérieure du corps intérieur.

2. Piton selon la revendication 1, caractérisé en ce que le filetage comporte trois nervures (14) et trois rainures (8) disposées en étoile.

3. Piton selon la revendication 1, caractérisé en ce que le corps extérieur (2) et le corps intérieur (12) ont chacun une tête (6, 16) en forme de disque.

4. Piton selon la revendication 3, caractérisé en ce que la tête (16) du corps intérieur (12) est sous la forme d'une tête de vis.

5. Piton selon la revendication 3, caractérisé en ce que le corps intérieur présente, à une certaine distance axiale de sa tête en forme de plaque, un disque-entretoise (32). (Figure 7).

6. Piton selon la revendication 1, caractérisé par les dispositions suivantes :
a) le piton a en plus un élément de fixation (20, 20') pour la pose d'objets, en particulier de matériaux plats, sur l'extrémité extérieure du corps intérieur (12),
b) le corps intérieur (12) a, entre l'extrémité extérieure des nervures (14) et la tête (16), un fût (18) avec un canal (26) ouvert vers l'extérieur,
c) l'élément de fixation a une broche (22, 22') destinée à être ancrée dans le canal et une tête (24), particulièrement en forme de plaque.

7. Piton selon la revendication 6, caractérisé en ce que la broche (22) et le canal (26) sont conformés à la manière d'un bouton-pression (Figures 2 et 3).

8. Piton selon la revendication 7, caractérisé en ce que la broche (22') et le canal (26') présentent des filetages externe et interne (Figures 8 et 9).

9. Piton selon la revendication 8, caractérisé en ce que le pas du filetage de la broche (22') et du canal (26') est plus grand que leur longueur.

10. Piton selon la revendication 8, caractérisé en ce que le filetage est à double pas et a deux nervures (34) et deux rainures (36) alignées entre elles dans le sens radial.

11. Piton selon la revendication 6, caractérisé en ce que le fond du canal (26, 26') communique par un trou d'aération (28) avec la ou les rainures (30) d'évacuation de l'air, et en ce qu'il existe entre la paroi interne du canal (26, 26') et la broche (22, 22') de l'élément de fixation (20, 20') un trajet d'évacuation de l'air allant vers l'extérieur.
